# EUROPÄISCHE PATENTSCHRIFT

(11) **EP 0 469 336 B1**
(45) Veröffentlichungstag und Bekanntmachung des Hinweises auf die Patenterteilung: **09.03.1994**
(21) Anmeldenummer: 91111256.3
(22) Anmeldetag: 06.07.1991
(51) Int. Cl.: G01L 9/06

(54) **Resistiver Drucksensor**
Resistive pressure sensor
Capteur de pression résistif

(30) Priorität: 28.07.1990 EP 90114528
(43) Veröffentlichungstag der Anmeldung: 05.02.1992
(73) Patentinhaber: ENDRESS + HAUSER GMBH + CO., D-79689 Maulburg (DE)
(72) Erfinder: Neumeister, Jochen, Dipl.-Ing., W-7000 Stuttgart 30 (DE)
(74) Vertreter: Morstadt, Volker, Dipl.-Ing. c/o Endress + Hauser Flowtec AG

(56) Entgegenhaltungen:
- EP-A- 0 320 299
- DE-A- 3 817 905
- MICROELECTRONICS JOURNAL, Bd. 17, Nr. 1, Januar 1986, Luton, GB, Seiten 35 - 41; A. DI FLORE U. A.: "THICK FILM PRESSURE TRANSDUCERS"

## Beschreibung

Die Erfindung besteht nach dem Wortlaut des Anspruchs 1 in einem resistiven Drucksensor mit einer an ihrem Rand gehalterten Membran, auf der eine aus zwei bzw. vier in Dickschichttechnik aufgebrachten ohmschen Widerständen bestehende, mittels ebenfalls in Dickschichttechnik aufgebrachter Leiterbahnen kontaktierte Halb- bzw. Vollbrückenschaltung derart angeordnet ist, daß die Widerstände in ihrer Aufdruckrichtung mit minimalem Abstand hintereinanderliegen, daß die Aufdruckrichtung mit der Längsachse der hintereinanderliegenden Widerstände zusammenfällt und daß der jeweils randnahe Widerstand außerhalb des Bereichs der Membran mit maximaler Dehnung/Stauchung liegt.

Resistive Drucksensoren, bei denen die Widerstände durch Verfahren der Dickschichttechnik hergestellt werden, sind z.B in der GB-A 20 71 853 oder der GB-A 21 87 887 beschrieben. In der Dickschichttechnik werden bekanntlich die einzelnen Komponenten dadurch hergestellt, daß eine Paste mit der die jeweils beabsichtigten Eigenschaften bestimmenden chemisch-physikalischen Zusammensetzung mittels einer Druckrakel durch die Öffnungen eines über einen Trägerkörper gespannten Siebes oder einer darauf/darüber angeordneten Maske hindurch auf diesen aufgedruckt wird. Die Bewegungsrichtung der Druckrakel wird im folgenden als Aufdruckrichtung bezeichnet.

Es hat sich nun durch Untersuchungen des Erfinders gezeigt, daß die Güte der in Dickschichttechnik hergestellten resistiven Drucksensoren aufgrund der bei der Herstellung auftretenden Widerstandstoleranzen und der Toleranzen der Temperaturabhängigkeit der Widerstände unzureichend ist. Die Güte, die hier als der Quotient von Druckempfindlichkeit und Temperaturempfindlichkeit definiert ist, läßt sich nur dann verbessern, wenn die Widerstände entsprechend der Erfindung mit minimalem Abstand in Aufdruckrichtung hintereinanderliegen, die Aufdruckrichtung mit der Längsachse der Widerstände zusammenfällt und der jeweils randnahe Widerstand außerhalb des Bereichs der Membran mit maximaler Dehnung/Stauchung liegt, also von der Einspannstelle der Membran, z.B. am Rand einer von ihr und einem Grundkörper gebildeten Kammer, einen vorgegebenen und ausreichenden Abstand hält. Als Längsachse der Widerstände ist dabei diejenige Achse anzusehen, die zur Richtung des in den Widerständen fließenden Stromes parallel ist.

In der DE-A 38 17 905, Fig. 6a ist ein resistiver Drucksensor mit einer Vollbrückenschaltung lediglich schematisch und ohne nähere Erläuterung in der Beschreibung gezeigt, bei dem zwar die vier Widerstände hintereinanderliegen, jedoch mit Abständen, die bei der Halbbrücke aus den dortigen Widerständen R1, R2 und bei der Halbbrücke aus den dortigen Widerständen R3, R4 jeweils etwa ihrer Länge und bei den dortigen Widerständen R2, R3 etwa ihrer halben Länge gleich sind. Ferner berühren bei diesem Drucksensor die randnahen Widerstände den Kammerrand, liegen also im Bereich maximaler Dehnung/Stauchung. Dieser Drucksensor ist somit auf maximale Druckempfindlichkeit hin konzipiert. Wie der Erfinder erkannt hat, sind bei maximaler Druckempfindlichkeit jedoch weitere wichtige Eigenschaften des Drucksensors, insb. die Güte, nicht optimiert.

Der erfindungsgemäße Aufbau hat demgegenüber u.a. den Vorteil, daß der Drucksensor nicht - wie z.B. auch der in der US-A 43 11 980 beschriebene - auf maximale Druckempfindlichkeit, sondern auf optimale Güte hin konzipiert ist.

Durch die erfindungsgemäße Anordnung der Widerstände hat der Drucksensor auch eine geringe Temperaturempfindlichkeit. Dies ist darauf zurückzuführen, daß zwar eine wesentlich kleinere als die maximal mögliche Druckempfindlichkeit bewußt in Kauf genommen wird - sie ist nur etwa halb so groß wie die Druckempfindlichkeit der in der genannten DE-A oder der genannten US-A beschriebenen Anordnung -, daß die Temperaturempfindlichkeit jedoch derart überproportional verkleinert ist (etwa um einen Faktor von 3 bis 6), daß die Güte des Sensors merklich erhöht ist (etwa um einen Faktor von 1,5 bis 3).

Ferner ist durch die erfindungsgemäße Anordnung der Widerstände der Absolutwert des Nullpunkts des Sensorsignals um mindestens den Faktor 3 verbessert. Somit ist zu erwarten, daß die Langzeitstabilität des Drucksensors im Vergleich zu der eines Drucksensors mit maximaler Druckempfindlichkeit ebenfalls verbessert ist.

In Weiterbildung der Erfindung hat der Drucksensor einen Grundkörper, der mit der Membran unter Bildung einer Kammer zusammengefügt ist.

Besonders vorteilhaft ist es, wenn bei einer Halbbrückenschaltung der eine Widerstand so angeordnet ist, daß sein Mittelpunkt mit dem der Membran und seine Längsachse mit einem Durchmesser der Membran zusammenfällt.

Besonders vorteilhaft ist es ferner, wenn bei einer Vollbrückenschaltung die Widerstände derart angeordnet sind, daß ihre Längsachse mit einem Durchmesser der Membran zusammenfällt und daß jeweils zwei Widerstände diesseits bzw. jenseits des zu diesem Durchmesser senkrechten Durchmessers liegen.

Ferner ist es vorteilhaft, wenn die Aufdruckrichtung der Leiterbahnen senkrecht zu der der Widerstände ist oder wenn die zwei bzw. die vier Widerstände jeweils dieselben Abmessungen haben.

Die Erfindung wird nun anhand der Figuren der Zeichnung näher erläutert, in der Ausführungsbeispiele dargestellt und gleiche Teile mit denselben Bezugszeichen versehen sind.
- Fig. 1 zeigt: schematisch im Schnitt entlang der Linie A-A von Fig. 2 einen Drucksensor nach der ersten Variante der Erfindung,
- Fig. 2 zeigt: in Draufsicht den Drucksensor von Fig. 1,
- Fig. 3 zeigt: schematisch im Schnitt entlang der Linie A-A von Fig. 4 einen Drucksensor nach der zweiten Variante der Erfindung,
- Fig. 4 zeigt: in Draufsicht den Drucksensor von Fig. 3,
- Fig. 5 zeigt: ein mögliches Layout einer Leiterbahnführung eines Drucksensors nach den Figuren 3 und 4, und
- Fig. 6 zeigt: eine andere Möglichkeit für die Einspannung der Membran.

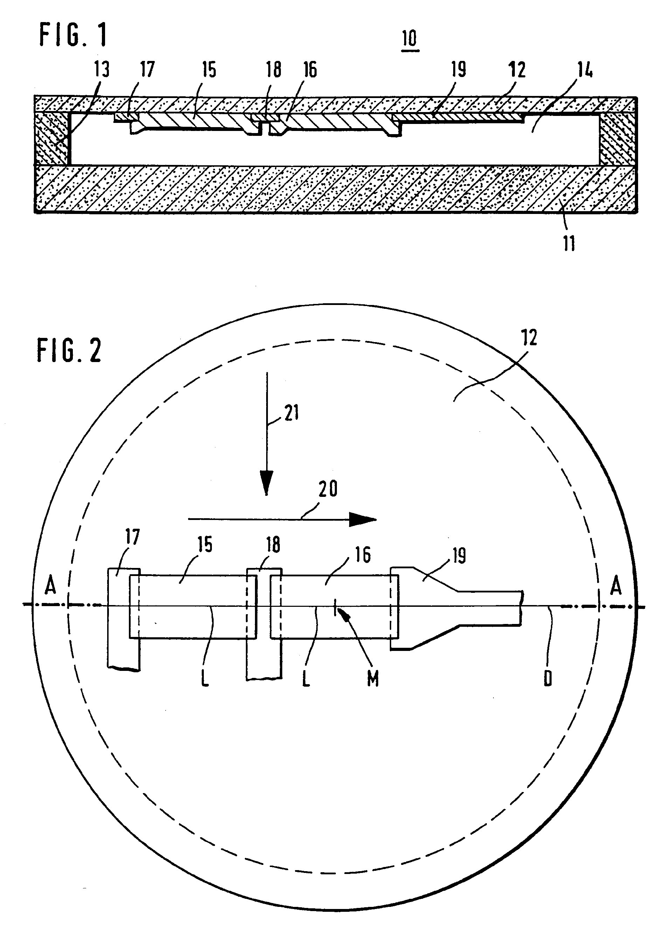

Der in den Figuren 1 und 2 dargestellte Drucksensor 10 nach der einen Variante der Erfindung umfaßt einen Grundkörper 11 und eine Membran 12, die jeweils kreisrunde Scheiben mit planparallelen Flächen sind und aus einem für die Dickschichttechnik geeigneten Isoliermaterial, wie z.B. aus Keramik, insb. Aluminiumoxid-Keramik, vorzugsweise mit einem Reinheitsgrad von 96%, gebildet sind.

Grundkörper 11 und Membran 12 sind ferner rings um den Umfang in einem definierten Abstand mittels eines ringförmigen Abstandsteils 13, das z.B. aufgedruckt oder ein vorgefertigtes Formteil sein kann, zusammengefügt und fest miteinander verbunden, so daß zwischen den Innenflächen von Grundkörper und Membran eine Kammer 14 entsteht.

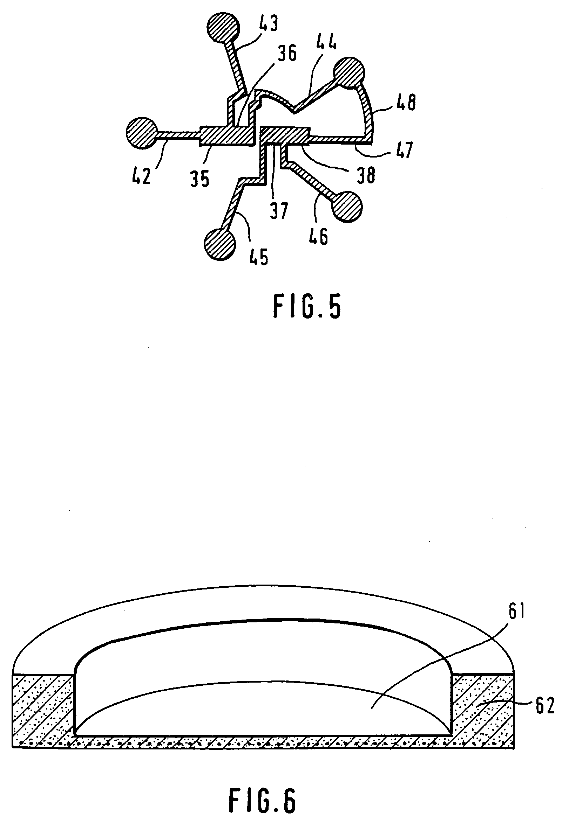

Die Membran 12 ist elastisch, so daß sie sich unter einem auf sie einwirkenden Druck verformen kann. Der Grundkörper 11 ist massiv und starr. Ein anderer Aufbau der Einspannung der Membran des Drucksensors wird anhand der Fig. 6 noch beschrieben.

Auf der dem Grundkörper 11 zugewandten Innenfläche der Membran 12 sind in Dickschichttechnik zwei ohmsche, piezoresistive Widerstände 15, 16 aufgebracht, die mittels ebenfalls in Dickschichttechnik entweder schon vor deren Aufbringung - wie in Fig. 1 und 2 zeichnerisch dargestellt - oder erst danach aufgetragener Leiterbahnen 17, 18, 19 zu einer Halbbrückenschaltung kontaktiert sind.

Dabei sind die Widerstände 15, 16 in ihrer Aufdruckrichtung mit minimalem Abstand hintereinander angeordnet; sie fluchten also hinsichtlich ihrer Längsachsen L, und die Aufdruckrichtung fällt mit der gemeinsamen Längsachse zusammen. Die Aufdruckrichtung ist durch den Pfeil 20 veranschaulicht. Der minimale Abstand ist derjenige Abstand, der technologisch, z.B. ohne Erhöhung der Herstellungstoleranzen, möglich ist und der unter Betriebsbedingungen nicht zu gegenseitiger elektrischer Beeinträchtigung führt.

Das mit der Leitbahn 17 kontaktierte Ende des Widerstands 15 hält dabei vom Membranrand einen ausreichenden Abstand ein, an welcher Stelle ja einer der Bereiche der Membran mit maximaler Dehnung/Stauchung vorliegt, wenn sie sich durchbiegt.

Eine besonders optimale Lage der beiden Widerstände 15, 16 hinsichtlich der Güte des Drucksensors ergibt sich, wenn der eine Widerstand 16 so angeordnet ist, daß sein Mittelpunkt M mit dem der Membran 12 und seine Längsachse L mit einem Durchmesser D der Membran zusammenfällt. Der andere Widerstand 15 liegt somit vollständig in der linken Hälfte von Fig. 2, und dessen Längsachse L fällt ebenfalls mit dem Durchmesser D zusammen.

Zweckmäßigerweise haben die beiden Widerstände 15, 16 dieselben Abmessungen, also denselben Widerstandswert.

Die Leiterbahnen 17, 18, 19 sind bevorzugt so aufgetragen, daß ihre Aufdruckrichtung senkrecht zu der der Widerstände ist; dies ist durch den Pfeil 21 veranschaulicht. Die Leiterbahnen werden von den schmalseitigen Enden der Widerstände 15, 16 überlappt - auch das Umgekehrte ist möglich - und kontaktieren diese somit. Außerdem wird durch die Überlappung erreicht, daß während des Aufdruckens im Anfangsbereich des Aufdruckens allfällig auftretende, also fertigungsbedingte, Dejustierungen und Abweichungen von der beabsichtigten Widerstandsgeometrie, insb. Dickenabweichungen, mittels der jeweiligen Kontaktfläche an der Überlappung kurzgeschlossen werden und somit diese Widerstandsteile zum tatsächlichen Widerstandswert nicht beitragen.

Die Halbbrückenschaltung ergibt sich z.B. dann, wenn an die Leiterbahnen 17, 19 ein Eingangssignal, z.B. eine Versorgungsspannung, angelegt wird und entweder an den Leiterbahnen 17, 18 oder an den Leiterbahnen 18, 19 das entsprechende Ausgangssignal abgenommen wird.

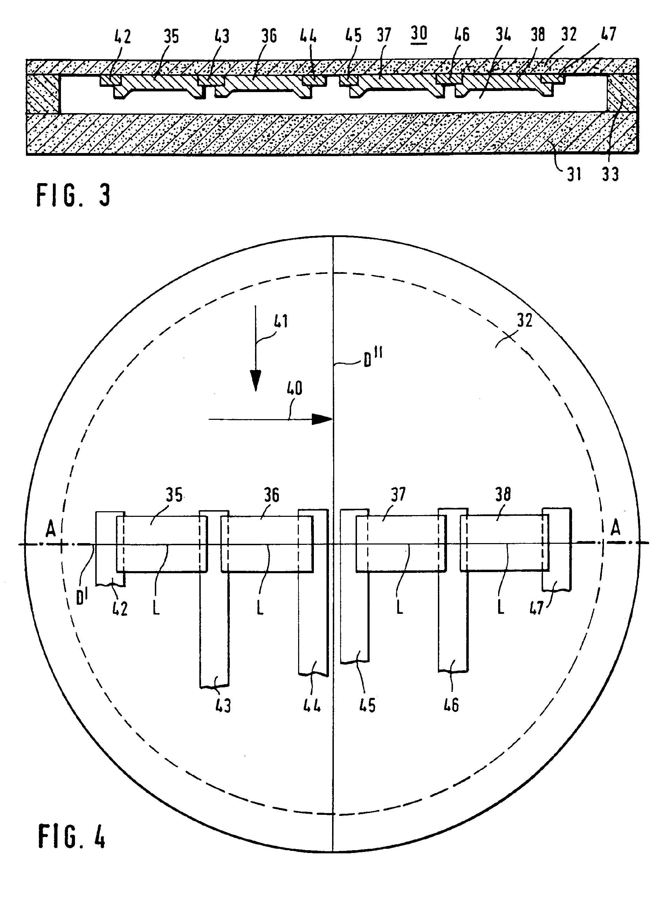

Der in den Figuren 3 und 4 dargestellte Drucksensor 30 nach der zweiten Variante der Erfindung umfaßt einen Grundkörper 31 und eine Membran 32, die wiederum jeweils kreisrunde Scheiben mit planparallelen Flächen sind und aus einem der oben genannten Isoliermaterialen gebildet sind.

Grundkörper 31 und Membran 32 sind ferner rings um den Umfang in einem definierten Abstand mittels eines ringförmigen Abstandsteils 33, das z.B. aufgedruckt oder ein vorgefertigtes Formteil sein kann, zusammengefügt und fest miteinander verbunden, so daß zwischen den Innenflächen von Grundkörper und Membran eine Kammer 34 entsteht. Die Membran 32 ist elastisch, so daß sie sich unter einem auf sie einwirkenden Druck verformen kann. Der Grundkörper 31 ist massiv und starr. Ein anderer Aufbau der Halterung der Membran des Drucksensors wird anhand der Fig. 6 noch beschrieben.

Auf der dem Grundkörper 31 zugewandten Innenfläche der Membran 32 sind in Dickschichttechnik vier ohmsche, piezoresistive Widerstände 35, 36, 37, 38 aufgebracht, die mittels ebenfalls in Dickschichttechnik entweder schon vor deren Aufbringung - wie in Fig. 3 und 4 zeichnerisch dargestellt - oder erst danach aufgetragener Leiterbahnen 42, 43, 44, 45, 46, 47 zu einer Vollbrückenschaltung kontaktiert sind.

Dabei sind die Widerstände 35, 36, 37, 38 in ihrer Aufdruckrichtung mit minimalem Abstand hintereinander angeordnet; sie fluchten also hinsichtlich ihrer Längsachsen L, und die Aufdruckrichtung fällt mit der gemeinsamen Längsachse zusammen. Die Aufdruckrichtung ist durch den Pfeil 40 veranschaulicht. Der minimale Abstand ist wiederum derjenige Abstand, der technologisch, z.B. ohne Erhöhung der Herstellungstoleranzen, möglich ist und der unter Betriebsbedingungen nicht zu gegenseitiger elektrischer Beeinträchtigung, z.B. durch Überschläge - etwa zwischen den Leiterbahnen 44, 45 -, führt. Das jeweilige mit den Leitbahnen 42 bzw. 47 kontaktierte Ende der Widerstände 35, 38 hält dabei vom Membranrand wiederum einen ausreichenden Abstand ein.

Eine besonders optimale Lage hinsichtlich der Güte des Drucksensors ergibt sich, wenn die vier Widerstände 35, 36, 37, 38 derart angeordnet sind, daß ihre gemeinsame Längsachse L mit einem Durchmesser D' der Membran 32 zusammenfällt und daß die beiden Widerstände 35, 36 diesseits des zum Durchmesser D' senkrechten Durchmessers D'' bzw. die beiden Widerstände 37, 38 jenseits des Durchmessers D'' liegen.

Die Leiterbahnen 42...47 sind bevorzugt wiederum so aufgetragen, dass ihre Aufdruckrichtung senkrecht zu der der Widerstände 35...38 ist; dies ist durch den Pfeil 41 veranschaulicht. Die Leiterbahnen werden von den schmalseitigen Enden der Widerstände überlappt und kontaktieren diese wiederum, so daß sich auch hier die oben für Fig. 2 geltenden Vorteile hinsichtlich der Widerstandsgenauigkeit ergeben.

Zweckmäßigerweise haben die vier Widerstände 35...38 dieselben Abmessungen, also denselben Widerstandswert.

Die Vollbrückenschaltung ergibt sich z.B. dann, wenn die Leiterbahn 42 mit der Leiterbahn 45 und die Leiterbahn 44 mit der Leiterbahn 47 verbunden wird. Dies kann bereits durch entsprechende Leitungsführung auf der Membran 32 geschehen. Es ist jedoch auch möglich, nur die eine dieser beiden Verbindungen auf der Membran 32, die andere dagegen erst außerhalb des Drucksensors, also innerhalb der elektronischen Schaltung vorzunehmen, mit der das vom Drucksensor abgegebene Meßsignal verarbeitet werden soll.

In Fig. 5 ist das Layout der letztgenannten Realisierung mit der Verbindung 48 zwischen den Leiterbahnen 44, 47 gezeigt. Es ergibt sich somit eine Vollbrückenschaltung, bei der immer, also in beiden Auslenkungsrichtungen der Membran, die beiden äußeren Widerstände 35, 38 und die beiden inneren Widerstände 36, 37 nicht im jeweiligen Bereich der Membran mit maximaler Dehnung/Stauchung liegen.

Die Kammer 14 bzw. 34 kann, anstatt wie in den Fig. 1 bis 4 gezeigt, verschlossen zu sein, im Grundkörper 11 bzw. 31 auch eine Entlüftungsöffnung aufweisen. Bei verschlossener Kammer ist diese meist evakuiert. Somit kann der Drucksensor dem gewünschten Verwendungszweck angepaßt werden.

In Fig. 6 ist schematisch in perspektivischer Schnittansicht eine weitere Möglichkeit gezeigt, wie die Membran an ihrem Rand eingespannt sein kann, ohne daß es eines Grundkörpers bedürfte. Eine kreisförmige Membran 61 ist an ihrem Rand fest mit einem Verstärkungsring 62 verbunden. Auf die Membran 61 kann eine der beiden oben geschilderten Varianten der Widerstandsanordnung aufgebracht werden.

## Patentansprüche

1. Resistiver Drucksensor (10; 30) mit einer an ihrem Rand gehalterten Membran (12; 32), auf der eine aus zwei bzw. vier in Dickschichttechnik aufgebrachten ohmschen Widerständen (15, 16; 35, 36, 37, 38) bestehende, mittels ebenfalls in Dickschichttechnik aufgebrachter Leiterbahnen (17, 18; 19; 42, 43, 44, 45, 46, 47, 48) kontaktierte Halb- bzw. Vollbrückenschaltung derart angeordnet ist, daß die Widerstände in ihrer Aufdruckrichtung (40) mit minimalem Abstand hintereinanderliegen, daß die Aufdruckrichtung mit der Längsachse (L, L') der hintereinanderliegenden Widerstände zusammenfällt und daß der jeweils randnahe Widerstand (15; 35, 38) außerhalb des Bereichs der Membran mit maximaler Dehnung/Stauchung liegt.

2. Resistiver Drucksensor nach Anspruch 1 mit einem Grundkörper (11; 31), der mit der Membran (12; 32) unter Bildung einer Kammer (14; 34) zusammengefügt ist.

3. Resistiver Drucksensor nach Anspruch 1 oder 2 mit einer Halbbrückenschaltung, bei dem der eine Widerstand (16) so angeordnet ist, daß sein Mittelpunkt (M) mit dem der Membran (12) und seine Längsachse (L) mit einem Durchmesser (D) der Membran zusammenfällt.

4. Resistiver Drucksensor nach Anspruch 1 oder 2 mit einer Vollbrückenschaltung, bei dem die Widerstände (35, 36, 37, 38) derart angeordnet sind, daß ihre Längsachse (L) mit einem Durchmesser (D') der Membran zusammenfällt und daß jeweils zwei Widerstände (35, 36; 37, 38) diesseits bzw. jenseits des zu diesem Durchmesser (D') senkrechten Durchmessers (D'') liegen.

5. Resistiver Drucksensor nach einem der Ansprüche 1 bis 4, bei dem die Aufdruckrichtung der Leiterbahnen senkrecht zu der der Widerstände ist.

6. Resistiver Drucksensor nach einem der Ansprüche 1 bis 5 mit zwei Widerständen (15, 16), die dieselben Abmessungen haben, bzw. mit vier Widerständen (35, 36, 37, 38), die dieselben Abmessungen haben.

## Claims

1. A resistive pressure sensor (10; 30) having a diaphragm (12; 32) which is attached at its edge and on which a half- or a full-bridge circuit consisting, respectively, of two or four thick-film resistors (15, 16; 35, 36, 37, 38) is arranged such that the resistors lie one behind the other in their direction of printing (40) with minimum space between them, that the direction of printing coincides with the longitudinal axis (L, L') of the resistors lying one behind the other, and that the respective resistor (15; 35, 38) near the edge is located outside the region of the diaphragm with maximum elongation/ compression.

2. A resistive pressure sensor as claimed in claim 1, comprising a substrate (11; 31) united with the diaphragm (12; 32) to form a chamber (14; 34).

3. A resistive pressure sensor as claimed in claim 1 or 2, comprising a half-bridge circuit in which one (16) of the resistors (15, 16) is arranged so that its center (M) coincides with that of the diaphragm (12) and that its longitudinal axis (L) coincides with a diameter of the diaphragm.

4. A resistive pressure sensor as claimed in claim 1 or 2, comprising a full-bridge circuit in which the resistors (35, 36, 37, 38) are arranged so that their longitudinal axis (L) coincides with a diameter (D') of the diaphragm and that two resistors (35, 36) are located on one side of the diameter (D'') perpendicular to said diameter (D') and two resistors (37, 38) on the other side.

5. A resistive pressure sensor as claimed in any one of claims 1 to 4 wherein the direction of printing of the conductor tracks is perpendicular to that of the resistors.

6. A resistive pressure sensor as claimed in any one of claims 1 to 5 wherein the two resistors (15, 16) having the same dimensions or the four resistors (35, 36, 37, 38) having the same dimensions.

## Revendications

1. Capteur de pression résistif (10; 30), comportant une membrane (12; 32) maintenue sur son bord, sur laquelle est disposé un circuit en demi-pont ou un circuit en pont complet composé de deux ou quatres résistances ohmiques (15, 16; 35, 36, 37, 38) appliquées selon la technique des couches épaisses, et dont la connexion est assurée au moyen de pistes conductrices (17, 18; 19; 42, 43, 44, 45, 46, 47, 48) également appliquées selon la technique des couches épaisses, de manière à ce que les résistances soient situées les unes à la suite des autres en présentant entre-elles un espacement minimal dans la direction de leur dépôt (40), que la direction de dépôt coincide avec l'axe longitudinal (L, L') des résistances situées les unes à la suite des autres, et que chaque résistance (15; 35, 38) voisine du bord soit située en-dehors de la zone à allongement/compression maximum de la membrane.

2. Capteur de pression résistif selon la revendication 1, comportant un corps de base (11; 31) qui est assemblé à la membrane (12; 32) en formant une chambre (14; 34).

3. Capteur de pression résistif selon la revendication 1 ou 2, comportant un circuit en demi-pont dans lequel une résistance (16) est disposée de manière à ce que son centre (M) coïncide avec celui de la membrane (12), et que son axe longitudinal (L) coincide avec un diamètre (D) de la membrane.

4. Capteur de pression résistif selon la revendication 1 ou 2 comportant un circuit en pont complet, dans lequel les résistances (35, 36, 37, 38) sont disposées de manière à ce que leur axe longitudinal (L) coïncide avec un diamètre (D') de la membrane, et que ces résistances soient situées deux par deux (35, 36; 37, 38) respectivement de part et d'autre du diamètre (D'') perpendiculaire à ce diamètre (D').

5. Capteur de pression résistif selon l'une des revendications 1 à 4, dans lequel la direction de dépôt des pistes conductrices est perpendiculaire à celle des résistances.

6. Capteur de pression résistif selon l'une des revendications 1 à 5, comportant deux résistances (15, 16) qui présentent les mêmes dimensions, ou comportant quatre résistances (35, 36, 37, 38) qui présentent les mêmes dimensions.
